# FASCICULE DE BREVET EUROPEEN

(11) **EP 0 971 484 B1**
(45) Date de publication et mention de la délivrance du brevet: **23.05.2001**
(21) Numéro de dépôt: 99401732.5
(22) Date de dépôt: 09.07.1999
(51) Int. Cl.: H04B 1/12

(54) **Récepteur d'équilibrage pour système de radiocommunication cellulaire**
Ausgleichender Empfänger für ein zellulares Funkkommunikationssystem
Balancing receiver for a cellular radio communications system

(30) Priorité: 10.07.1998 FR 9808948
(43) Date de publication de la demande: 12.01.2000
(73) Titulaire: FRANCE TELECOM, 75015 Paris (FR)
(72) Inventeur: Veyres, Camille, 75116 Paris (FR)
(74) Mandataire: Ballot, Paul

(56) Documents cités:
- EP-A- 0 552 727
- GB-A- 2 311 694
- US-A- 4 249 261
- US-A- 4 739 518
- MOULY ET AL: "The GSM System for Mobile Communications" 1993 , CELL & SYS , ISBN 2-9507190-0-7 XP002098014 * page 192 - page 193 * * page 217 - page 218 *

## Description

La présente invention se rapporte à un récepteur de système de radiocommunication cellulaire ainsi qu'à un système l'incorporant, notamment un système de radiocommunication GSM 900 ou DCS 1800.

Dans la suite, et à moins qu'il n'en soit disposé autrement, on considère l'exemple non limitatif d'un système de radiocommunication de type GSM. Les initiales GSM sont mises pour "Global System for Mobiles", ce qui, en anglais, signifie "Système Global pour les Mobiles".

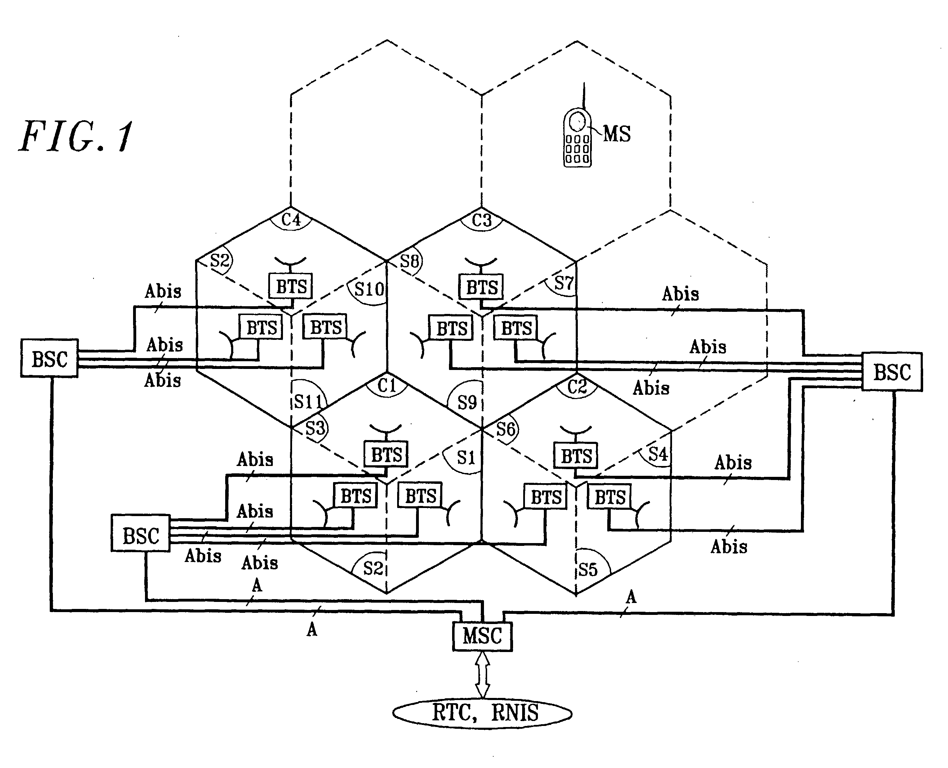

Un tel système (figure 1) comprend des stations mobiles et des moyens de communication fixes.

Les stations mobiles sont les équipements physiques utilisés par les usagers du système. Il s'agit notamment des appareils notés MS à la figure 1 et qui peuvent être des stations montées en véhicule, des stations portables, ou des téléphones portatifs.

Les moyens de communication fixes comprennent des stations de base (Base Transmitter Station, en anglais) ci-après appelées BTS, pour échanger (émission et réception) des signaux de parole ou de données avec les stations mobiles.

Plus exactement, les BTS assurent une fonction de modulation/démodulation de porteuses radioélectriques par ces signaux de parole ou de donnée, et une fonction de transposition et de multiplexage/démultiplexage de ces porteuses radioélectriques dans la bande allouée à l'opérateur.

A cet effet, chaque BTS comprend des moyens matériels et logiciels permettant l'échange de signaux radioélectriques avec les stations mobiles se trouvant dans sa zone de couverture, dans chacun des deux sens possibles.

Notamment, chaque BTS comprend des émetteurs/récepteurs en nombre égal au nombre de porteuses radioélectriques utilisées par la BTS. Dans la terminologie des systèmes GSM 900 et dans la suite, ces équipements sont appelés TRX.

De plus, chaque BTS est reliée à au moins une antenne réalisant l'interface avec l'air. En outre, des équipements fixes d'émission/réception radioélectrique assurent l'amplification de puissance et le couplage aux antennes pour la transmission des porteuses modulées. Dans la suite, ces équipements sont appelés relais.

La zone de couverture d'une BTS, c'est-à-dire la zone géographique dans laquelle les communications avec les stations mobiles sont transmises par l'intermédiaire de cette BTS, est appelée zone de BTS ou secteur. L'aire géographique couverte par le système de radiocommunication est ainsi segmentée en un réseau de secteurs, dit aussi "réseau mobile".

Les moyens de communication fixes du système comprennent aussi des contrôleurs de stations de base (Base Stations Controller, en anglais), ci-après appelés BSC, assurant une fonction de commande et de contrôle des BTS. Chaque BTS est reliée à un BSC. Chaque BSC peut être relié à une ou plusieurs BTS pour les commander et les contrôler.

Les moyens de communication fixes comportent enfin des commutateurs de services mobiles (Mobiles Services Commutator, en anglais), ci-après appelés MSC, assurant toutes les fonctions de commutation nécessaires pour les stations mobiles situés dans une partie, appelée zone de MSC, de la zone géographique couverte par le système. Dit autrement, un MSC est un autocommutateur de téléphonie. Il est relié à un ou des réseaux de télécommunication fixes, tels que le réseau téléphonique commuté (RTC) conçu pour le transport de la parole, ou le réseau numérique d'intégration de service (RNIS) conçu pour le transfert de la parole et de données. Il assure et met à jour la localisation des stations mobiles et applique les procédures prévues pour l'acheminement des communications en prenant en compte la nature mobile des usagers.

L'interface entre un MSC et un BSC est appelée interface A et l'interface entre un BSC et une BTS est appelée interface Abis. Ce sont des liaisons filaires (paires torsadées en cuivre) supportant un débit numérique de l'ordre de 2 Mbits/s (mégabits par seconde). Ces interfaces sont normalisées de manière à permettre l'assemblage d'équipements de diverses origines.

Selon les prescriptions de la norme GSM 05-05 un système ne peut utiliser que des porteuses se situant dans une première bande de fréquences comprise entre 890 et 915 MHz (mégahertzs) pour le sens réseau mobile vers réseau fixe (appelé voie montante) et dans une seconde bande de fréquence comprise entre 935 et 960 MH pour le sens réseau fixe vers réseau mobile (appelé voie descendante).

Dans chacune de ces deux bandes, les systèmes ne peuvent en fait utiliser que 124 porteuses monofréquences déterminées, espacées avec un pas de 200 KHz (kilohertzs). Dans une aire géographique déterminée, l'usage exclusif de telle ou telle porteuse par tel ou tel système est réglementé par l'administration publique. Bien entendu, si plusieurs systèmes gérés par des opérateurs différents coexistent dans une même aire géographique, chaque opérateur veille à n'émettre que sur celles des 124 porteuses qui lui sont réservées, de manière à ne pas perturber les porteuses réservées à ses concurrents.

Une porteuse de la première bande et une porteuse de la seconde bande sont associées pour constituer un circuit téléphonique bidirectionnel. L'écart entre ces deux porteuses est appelé écart duplex. Cet écart est constant. Pour un système de type GSM 900, il vaut 45 MHz.

En raison du nombre limité de circuits téléphoniques bidirectionnels ainsi disponibles, chaque opérateur utilise en fait une même porteuse dans plusieurs secteurs suffisamment éloignés les uns des autres pour éviter tout risque d'interférences entre les circuits téléphoniques correspondants.

Plus précisément, un groupe de plusieurs porteuses de la première bande (et leurs porteuses associées de la seconde bande) sont affectées à un groupe de plusieurs BTS dont les secteurs sont géographiquement non contigus.

Par exemple, dans le système de l'opérateur FRANCE TELECOM, auquel sont réservées soixante deux porteuses dans chaque bande (soit un spectre de 12 MH de largeur) les porteuses sont réparties en douze groupes de cinq porteuses (deux porteuses n'étant pas utilisées). Dans la suite, on utilisera l'expression "couleur" pour désigner un tel groupe de porteuses. Ces douze couleurs sont respectivement affectées à douze secteurs géographiquement contigus.

A la figure 1, on a représenté schématiquement les moyens essentiels d'un système de radiocommunication cellulaire selon l'art antérieur.

Trois BTS, dont les secteurs S1, S2 et S3 sont adjacents, sont regroupées sur un même site appelé base, et sont reliées respectivement à trois antennes directives orientées selon des directions à 120° l'une de l'autre. Ces trois secteurs forment une cellule C1. De même trois autres cellules C2, C3 et C4 sont formées chacune de trois secteurs couvrant chacun un angle de 120°, respectivement S4-S6, S7-S9, et S10-S12. On parle de cellules tri-sectorielles. A centre de chaque cellule se trouve une base abritant les BTS des trois secteurs de la cellule.

Une cellule est communément représentée de façon stylisée par un hexagone, ainsi qu'on peut le voir à la figure 1.

L'aire géographique couverte par le système de radiocommunication est donc segmentée en un réseau de cellules tri-sectorielles, avec un plan d'attribution des fréquences constitué par un motif de base à quatre cellules et douze couleurs reproduit autant de fois que nécessaire, par abus de langage, les termes "secteur" et "cellule" seront indistinctement utilisés dans la suite pour désigner une zone de BTS.

Une BTS donnée utilise donc les fréquences d'une seule et unique couleur pour les communications avec les mobiles présents dans la cellule à laquelle elle est associée. Les BTS comprennent donc autant de TRX qu'il y a de porteuses dans la couleur. Dans l'exemple ci-dessus, les BTS comprennent cinq TRX.

En outre, l'axe des temps est divisé en intervalles de temps réguliers (Time Slots, en anglais), ci-après appelés IT, dont la durée est égale à 0,577 ms. Huit tels intervalles consécutifs forment une trame. Une trame dure donc 4,6 ms. Au sein d'une trame, les IT sont repérés par un numéro de zéro à sept. La suite récurrente des IT portant le même numéro constitue un canal physique pour la transmission de données ou de la parole. En fait, seuls sept IT par trame sont disponibles pour la transmission des données utiles. C'est donc sept canaux physiques qui sont disponibles par porteuse.

Bien évidemment, cette division de l'axe des temps en intervalles s'applique aussi bien à la voie montante qu'à la voie descendante. Cependant la numérotation des IT pour la voie montante et la numérotation des IT pour la voie descendante sont décalées de trois unités. De la sorte, on s'assure qu'une station mobile ne peut émettre et recevoir en même temps.

On constate ainsi un double entrelacement temporel et fréquentiel des canaux physiques pour la voie montante et des canaux physiques associés pour la voie descendante.

De plus, la plupart des systèmes de radiocommunication GSM 900 utilisent la possibilité, prévue par la norme GSM 05-05, d'un saut de fréquence lent. Comme on le sait, cette fonctionnalité consiste à modifier de façon périodique (à chaque trame, soit toutes les 4,6 ms) l'attribution des couleurs aux différents secteurs du motif de base du réseau mobile. Ce saut de fréquence permet de répartir entre plusieurs canaux physiques l'effet d'un éventuel brouilleur qui perturberait une fréquence déterminée. Cette répartition se traduit par une linéarisation du rapport signal/bruit des différents canaux physiques et, par conséquent, par une amélioration de la qualité globale des radiocommunications.

Dans chaque IT, on émet un train de 148 bits comprenant 114 bits d'informations utiles. Les bits restant sont des bits de service, notamment de signalisation et de synchronisation. Les bits de service comprennent notamment une séquence de 26 bits disposée en milieu de train, dite "séquence d'apprentissage", choisie pour ses bonnes propriétés d'autocorrélation. Cette séquence a pour fonction de permettre la synchronisation du canal physique malgré les phénomènes de trajets multiples inhérente à toute propagation radioélectrique.

Différents types de canaux logiques sont multiplexés sur les canaux physiques. En effet, ces canaux logiques sont de deux types: d'une part des canaux de trafic (Trafic Channel, en anglais), ci-après appelés canaux TCH, et d'autre part des canaux de contrôle ou de signalisation (Control Channel, en anglais), ci-après appelés canaux CCH.

Les premiers servent à la transmission de la parole ou de données produites par les usagers (les porteuses qui supportent les canaux TCH sont parfois appelées porteuses de conversation ou porteuses de trafic).

Les seconds servent à la transmission d'informations nécessaires à la gestion du système. Notamment, les canaux CCH comprennent un canal diffusé (Broadcast Control Channel, en anglais), ci-après canal BCCH, qui fournit aux stations mobiles des informations relatives à la cellule dans laquelle elles se trouvent ainsi qu'aux cellules voisines. Le canal BCCH est un canal dans le sens réseau fixe vers réseau mobile. La porteuse qui supporte ce canal, dite ci-après "porteuse F_{BCCH}" ou "porteuse balise", est émise à fréquence constante et sans régulation de niveau (en fait, elle est émise à la puissance maximum disponible).

Une porteuse F_{BCCH} est associée à chaque secteur du motif de base. Un réseau mobile à motif de base à n secteurs nécessite donc au moins n porteuses F_{BCCH}. De plus, les porteuses F_{BCCH} ne sont pas soumises au saut lent de fréquence.

Chaque station mobile comporte des moyens pour mesurer le niveau de toutes les porteuses F_{BCCH} qu'il lui est imposé de mesurer, à savoir la porteuse F_{BCCH} associée à la cellule dans laquelle il se trouve, et les porteuses F_{BCCH} associées aux cellules adjacentes à cette cellule. Les stations mobiles comportent aussi des moyens pour envoyer un rapport de mesure après calcul d'une moyenne sur un certain nombre de mesures, ce rapport incluant des informations sur la qualité des informations reçues en vue de permettre le basculement intercellulaire (hand-over, en anglais) nécessité par la nature mobile des usagers. La qualité des informations reçues est déterminée par le calcul d'un taux d'erreur.

En outre, les canaux CCH comprennent un canal d'accès aléatoire (Random Access Control Channel, en anglais), ci-après canal RACH. Le canal RACH est un canal dans le sens réseau mobile vers réseau fixe. La porteuse qui supporte ce canal, dite ci-après "porteuse F_{RACH}", a une fréquence f_{RACH} décalée par rapport à la fréquence f_{BCCH} de la porteuse F_{BCCH} d'un écart déterminé dont la valeur est celle de l'écart duplex mentionné ci-dessus, c'est à dire 45 MHz pour un système conforme à la norme GSM 900. Plus précisément la fréquence de la porteuse F_{RACH} est inférieure de 45 MHz à la fréquence de la porteuse F_{BCCH} (f_{RACH}=f_{BCCH}-45 MHz). Dit autrement, la porteuse F_{RACH} est en dessous de la porteuse F_{BCCH} et l'écart entre les deux est constant. Il vaut 45 MHz pour un système conforme à la norme GSM 900 et 95 MHz pour un système conforme à la norme DCS 1800.

En outre le canal physique supportant le canal RACH est décalé de trois intervalles de temps ("Time Slots") dans le sens retard, par rapport au canal physique supportant le canal BCCH.

La porteuse F_{RACH} est émise au maximum de puissance disponible, notamment à la mise en route de la station mobile. En effet, la station mobile comporte des moyens pour mesurer le niveau des porteuses F_{BCCH} qu'il peut recevoir et pour rechercher la porteuse dont le niveau est maximum, ainsi que des moyens pour émettre un message d'acquittement sur le canal RACH duplex associé au canal BCCH correspondant à cette porteuse. Par l'émission de ce message d'acquittement, la station mobile effectue une demande d'allocation de ressources, en vue de l'établissement d'une communication.

L'invention concerne un récepteur de système de radiocommunication cellulaire, tel que le système décrit ci-dessus. Plus particulièrement, le récepteur est un récepteur large bande pour un répéteur multiporteuse, placé en tête des moyens de communication fixes dans la chaîne de transmission montante (réseau mobile vers réseau fixe).

Un tel récepteur est donc placé dans le système en amont des BTS, le terme amont devant ici être compris en considérant le sens réseau mobile vers réseau fixe.

Un signal multifréquence dont le spectre comporte des porteuses GSM, notamment une porteuse F_{RACH}, est transmis dans le sens réseau mobile vers réseau fixe entre une station mobile et un site d'émission/réception où il est reçu par le récepteur au moyen d'une antenne.

Il est ensuite délivré en entrée d'une BTS, soit directement si la BTS et les moyens d'émission/réception sont sur le même site, soit après transmission sur une liaison si le site d'installation de la BTS et le site d'émission/réception sont éloignés.

Ce dernier cas se rencontre notamment dans une configuration microcellulaire. Dans une telle configuration, les signaux multifréquence émis par les stations mobiles sont reçus par des boîtiers d'émission/réception disposés à quelques mètres au dessus du sol (on parle de configuration "au dessous des toits") qui contiennent un récepteur. En milieu urbain, la zone de couverture d'un tel boîtier d'émission/réception correspond classiquement à un groupe de rues appelé "microcellule". Plusieurs microcellules dépendent d'une même BTS et la liaison entre la BTS et les boîtiers d'émission/réception est réalisée sur fibre optique ou câble coaxial, voire même par faisceau hertzien, moyennant transposition de fréquence appropriée à chaque extrémité.

On a dit ci-dessus que la porteuse F_{RACH} est émise par les stations mobiles à la puissance maximum disponible, c'est à dire à une puissance de l'ordre de 1 Watt pour un téléphone portatif de classe 5. La porteuse F_{RACH} présente donc un niveau bien supérieur à celui des autres porteuses (porteuses de trafic).

Or, si la distance qui sépare la station mobile du récepteur est faible, notamment, dans la cas d'une configuration microcellulaire, si l'usager se trouve juste en dessous d'un boîtier d'émission/réception, cette porteuse est susceptible de saturer le récepteur et/ou d'autres équipements de la chaîne de transmission montante.

Dans les cas les plus défavorables, le niveau de la porteuse F_{RACH} peut être supérieur de 20 à 40 dB au niveau des autres porteuses du signal multifréquence.

Certains équipements comportant des moyens de réglage de leur sensibilité, par exemple des dispositifs de contrôle automatique de gain, la sensibilité de ces équipements peut alors être brutalement réduite du fait de l'apparition de la porteuse F_{RACH} dans le spectre, en sorte que la modulation des autres porteuses par des signaux d'informations et/ou de parole provenant d'autres stations mobiles peut ne pas être détectée de façon correcte. De manière imagée, ou peut dire que la chaîne de transmission montante est "éblouie" par la porteuse F_{RACH}.

La présente invention vise à proposer des moyens pour résoudre ce problème.

A cet effet, l'invention propose un récepteur de système de radiocommunication cellulaire, notamment un système conforme à la norme GSM 900 ou à la norme DCS 1800 qui comporte des premiers moyens pour transmettre, dans le sens réseau fixe vers réseau mobile, un signal multifréquence ayant un spectre qui comprend une porteuse balise dont la fréquence est fixe, et des seconds moyens pour transmettre, dans le sens réseau mobile vers réseau fixe, un signal multifréquence ayant un spectre qui comprend une porteuse d'accès aléatoire dont la fréquence est décalée d'un écart déterminé par rapport à la fréquence de ladite porteuse balise.

Le récepteur selon l'invention comporte un dispositif d'atténuation sélective du niveau de la seule porteuse d'accès aléatoire lorsque celui-ci est supérieur à un seuil déterminé.

Ainsi, lorsque la station mobile qui émet un message d'acquittement sur le canal RACH est physiquement très proche du récepteur, le niveau de la porteuse RACH est atténué mais non celui des autres porteuses du spectre.

Selon une caractéristique avantageuse de l'invention, le dispositif d'atténuation sélective est un dispositif interférométrique assurant l'atténuation par couplage, en opposition de phase et à niveau requis, d'un signal d'atténuation à la fréquence de la porteuse d'accès aléatoire. Un tel dispositif présente de bonnes propriétés de linéarité et permet donc de ne pas fortement déformer le reste du spectre du signal multifréquence.

Selon une autre caractéristique avantageuse de l'invention, le dispositif d'atténuation sélective comporte des moyens de filtrage à bande étroite fonctionnant à une fréquence intermédiaire basse ou à fréquence intermédiaire nulle, ainsi que des premiers moyens de transposition pour assurer la transposition du signal multifréquence à cette fréquence intermédiaire avant filtrage, et des seconds moyens de transposition pour rétablir le signal multifréquence dans sa bande d'origine après filtrage.

Au sens de la caractéristique qui précède, une fréquence intermédiaire basse est une fréquence de valeur faible par rapport aux valeurs des fréquences GSM qui sont comprises entre 900 et 1000 MHz. Par exemple, une fréquence basse est de l'ordre de quelques dizaines de mégahertz au maximum.

Cette fréquence intermédiaire sera fixe quelle que soit la fréquence des porteuses F_{BCCH} et F_{RACH}, par changement de la fréquence de l'oscillateur local de transposition, asservi à la fréquence de la porteuse F_{BCCH}.

La transposition du signal multifréquence à une fréquence intermédiaire basse, avant filtrage, permet d'utiliser un filtre à bande étroite et à forte réjection qui est plus simple à réaliser et donc plus économique qu'un filtre présentant les mêmes propriétés mais devant fonctionner dans la bande comprise entre 900 et 1000 MHz.

L'invention propose également un système de radiocommunication cellulaire incorporant un récepteur tel que celui décrit ci-dessus.

D'autres caractéristiques et avantages de la présente invention apparaîtront encore à la lecture de la description qui va suivre. Celle-ci est purement illustrative et doit être lue en regard des dessins annexés sur lesquels on a représenté:
- à la figure 1, déjà analysée: les moyens essentiels d'un système de radiocommunication cellulaire;
- à la figure 2a et à la figure 2b: respectivement le spectre d'un signal multifréquence émis dans le sens réseau fixe vers réseau mobile et le spectre du signal duplex associé;
- à la figure 3: le schéma d'un premier mode de réalisation d'un récepteur selon l'invention;
- à la figure 4: un schéma d'un second mode de réalisation d'un récepteur selon l'invention.

Comme il a été dit en introduction, une BTS émet (dans le sens réseau fixe vers réseau mobile) un signal à destination des stations mobiles présentes dans la cellule couverte, qui est un signal multifréquence c'est-à-dire dont le spectre comprend plusieurs fréquences de porteuses dans la bande utile.

Dans la description qui va suivre, on considère l'exemple d'un signal occupant une bande utile dont la largeur est de l'ordre de 6 ou 7 MHz. Les porteuses sont des porteuses GSM.

Parmi ces porteuses, on dénombre des porteuses de conversation ou de trafic (ou porteuses TCH), éventuellement soumises aux sauts de fréquence toutes les 4,6 ms et émises à des niveaux variables d'un intervalle de temps ("Time Slot") au suivant. Ces porteuse peuvent être modulées par des signaux d'information et/ou de parole.

On dénombre également une porteuse balise (ou porteuse BCCH) non soumise aux sauts de fréquence et émise à un niveau constant. Cette porteuse est modulée par des signaux de signalisation et/ou de synchronisation.

Plus particulièrement on considère un signal pouvant contenir sept porteuses réparties sur trente deux positions possibles dans une bande comprise entre 935,2 MHz et 941,8 MHz. Les positions possibles dans cette bande sont espacées d'un pas de 200 kHz.

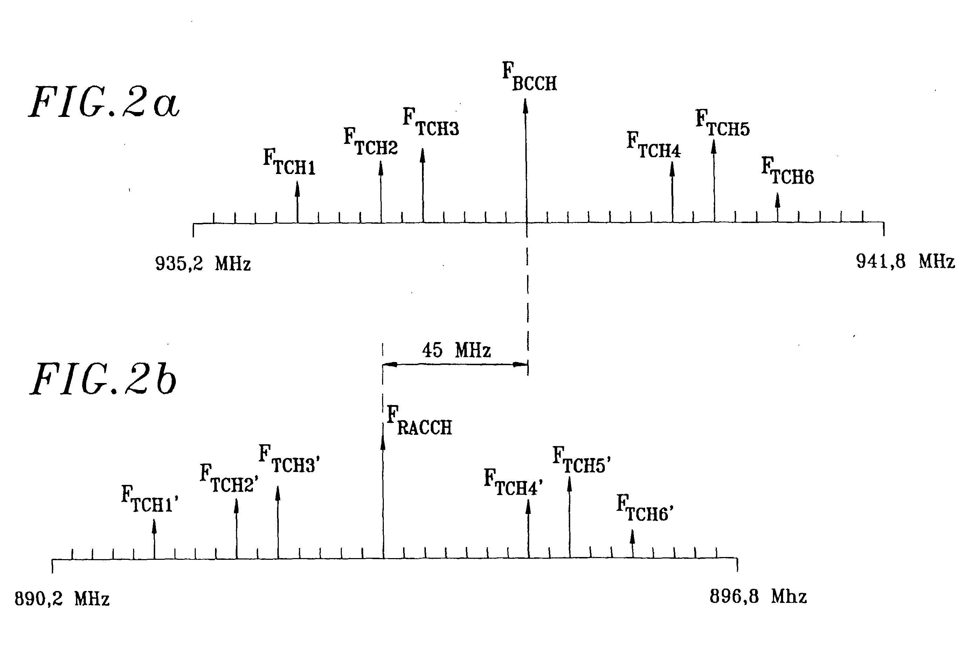

A la figure 2a, on a représenté le spectre d'un tel signal à un instant donné. Il comprend une porteuse balise, notée F_{BCCH} à la figure, située à une position parmi huit positions possibles sur l'axe des fréquences. Ces huit positions possibles se situent de préférence en milieu de la bande utile. L'avantage de cette disposition sera exposé plus loin.

La position occupée par la porteuse F_{BCCH} parmi les huit positions possibles ne varie pas au cours du temps, puisque cette porteuse n'est pas soumise aux sauts de fréquence. Cette position dépend de la cellule à laquelle correspond la BTS considérée au sein du motif de base du réseau cellulaire.

Le spectre du signal comporte en outre trois porteuses de trafic (notées F_{TCH1}, F_{TCH2}, F_{TCH3}) pouvant respectivement occuper trois positions distinctes parmi douze positions possibles dans la partie basse de la bande utile.

Le spectre comporte enfin trois autres porteuses de trafic (notées F_{TCH4}, F_{TCH5}, F_{TCH6}) pouvant respectivement occuper trois positions distinctes parmi les douze positions possibles dans la partie haute de la bande utile. Ces six porteuses TCH occupent une position variable dans le temps, en fonction du saut de fréquence.

La combinaison des positions occupées par les porteuses est déterminée par l'opérateur et résulte des choix impliqués par la planification des fréquences disponibles. Une combinaison de porteuses telle que celle représentée à la figure 2a constitue une couleur au sens indiqué en introduction.

On notera que dans chaque couleur, on ne trouve jamais deux porteuses adjacentes c'est-à-dire espacées de 200 kHz seulement. Dit autrement, deux porteuses appartenant à une même couleur, sont espacées de 400 kHz au moins.

A la figure 2b, on a représenté le spectre d'un signal émis, lors de sa mise en fonctionnement, par une station mobile présente dans la zone couverte par la même BTS.

La bande utile de ce signal est décalée, vers les fréquences inférieures, de 45 MHz (écart duplex pour un système GSM 900) par rapport à la bande utile du signal de la figure 2a.

Le spectre de la figure 2b comporte une porteuse F_{RACH}, qui est décalée, vers les fréquences inférieures, de 45 MHz par rapport à la porteuse F_{BBCH} comprise dans le spectre du signal de la figure 2a. On notera que la porteuse F_{RACH} se trouve donc avantageusement en milieu de la bande utile du spectre de la figure 2b. Celle-ci est comprise entre 890,2 MHz et 896,8 MHz. Elle est modulée par un signal de signalisation et de demande d'allocation de ressource émis par une station mobile avant l'établissement d'une communication.

Le spectre comporte en outre des porteuses de trafic notées F_{TCH1}', F_{TCH2}', F_{TCH3}', F_{TCH4}', F_{TCH5}', et F_{TCH6}' qui sont respectivement décalées de 45 MHz vers les fréquences inférieures, par rapport, respectivement, aux porteuses F_{TCH1}, F_{TCH2}, F_{TCH3}, F_{TCH4}, F_{TCH5}, et F_{TCH6} du signal de la figure 2a. Ces porteuses peuvent être modulées par des signaux d'information et/ou de parole émis par les stations mobiles.

Ainsi qu'on peut le voir représenté schématiquement à la figure 2b par la longueur des flèches qui symbolisent les porteuses du spectre, la porteuse F_{RACH} peut avoir un niveau très supérieur (de 20 à 40 dB) à celui des autres porteuses.

Le récepteur selon l'invention comporte un dispositif d'atténuation du niveau de la seule porteuse F_{RACH} lorsque celui-ci est supérieur à un seuil déterminé Vo. Dans la suite, on parlera parfois d'un dispositif d'atténuation sélective car il n'a d'effets que sur la fréquence f_{RACH} de la porteuse F_{RACH}, sans perturber les autres fréquences de porteuses du spectre.

Plus précisément, le récepteur comporte :
- des moyens de détection du niveau de la porteuse F_{RACH};
- une première voie qui est active en l'absence de dépassement du seuil Vo par le niveau de la porteuse F_{RACH};
- une seconde voie, comportant le dispositif d'atténuation sélective, qui est active dans le cas contraire;
- et des moyens de sélection pour sélectionner l'une ou l'autre voie en fonction du niveau de la porteuse F_{RACH}.

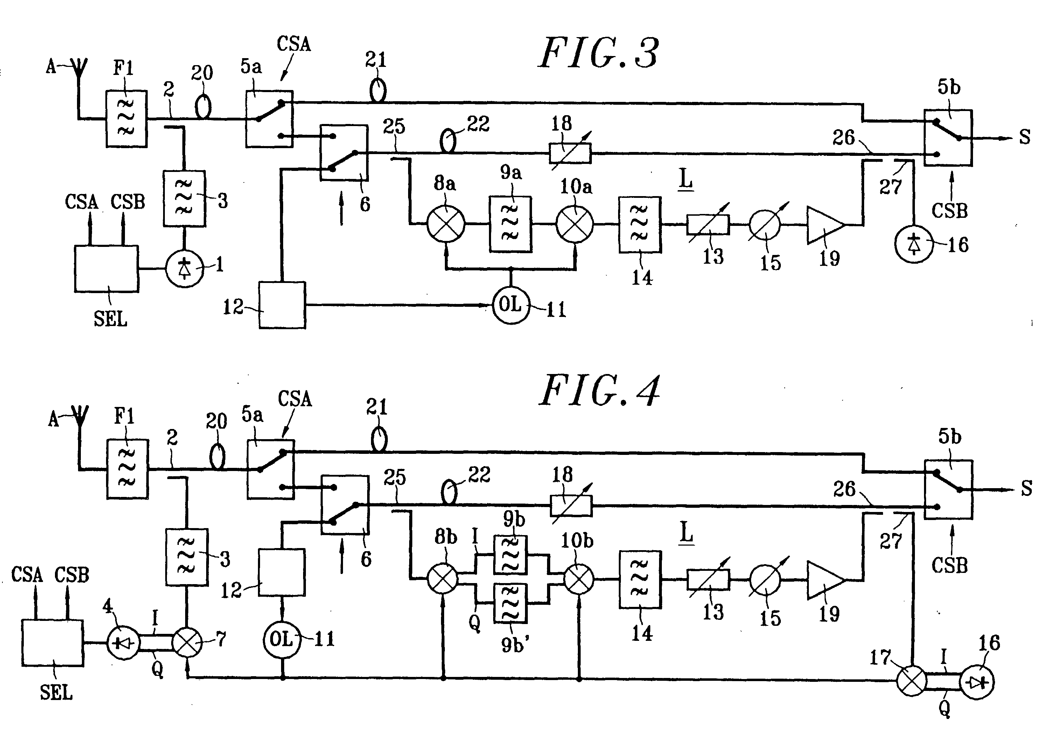

La figure 3 est un schéma d'un premier mode de réalisation d'un récepteur selon l'invention.

Le récepteur comporte une antenne A pour recevoir un signal multifréquence émis par les stations mobiles se trouvant dans la zone couverte par le récepteur. L'antenne est suivie d'une filtre passe-bande F1 centré sur la bande utile de ce signal, à savoir la bande comprise entre 890,2 et 896,8 MHz dans l'exemple. La sortie du filtre F1 est reliée, par l'intermédiaire d'une ligne à retard 20, à l'entrée commune d'un commutateur radiofréquence 5a, à une entrée et deux sorties.

La sortie S du récepteur est prise sur la sortie commune d'un second commutateur radiofréquence 5b, à deux entrées et une sortie.

La première voie précitée du récepteur relie une première sortie du commutateur 5a à une première entrée du commutateur 5b. De même, la seconde voie précitée relie la seconde sortie du commutateur 5a à la seconde entrée du commutateur 5b.

Pour un premier couple de positions des commutateurs 5a à 5b, le signal reçu par l'antenne A, filtré par le filtre F1, et retardé par la ligne à retard 20, est transmis directement en sortie S du récepteur par la première voie.

Pour un second couple de positions des commutateurs 5a et 5b, ce même signal est transmis à la sortie S du récepteur par la seconde voie comprenant le dispositif d'atténuation sélective du niveau de la porteuse F_{RACH}.

Comme on l'aura compris, la position des commutateurs 5a et 5b est commandée par les moyens de sélection précités. A la figure 3, ceux-ci portent la référence SEL. Ils génèrent des signaux de commande CSA et CSB de la position des commutateurs respectivement 5a et 5b.

En d'autres termes, la fonction des moyens de sélection SEL est de comparer le niveau de la porteuse F_{RACH} au seuil Vo et de générer les signaux CSA et CSB en conséquence. Par niveau de la porteuse, on entend par exemple le module du rayon vecteur de cette porteuse (exprimé en volts).

Les moyens de détection du niveau de la porteuse F_{RACH} comprennent en série un coupleur 2 disposé entre le filtre F1 et la ligne à retard 20 , un filtre passe-bande 3 centré sur la bande utile du signal multifréquence, ainsi qu'un détecteur 1 relié aux moyens de sélection SEL.

Le coupleur 2 permet de prélever une partie de la puissance du signal multifréquence reçu.

La caractéristique mentionnée plus haut, selon laquelle la porteuse F_{RACH} se trouve dans le milieu de la bande utile du signal multifréquence reçu, permet de simplifier la conception du filtre 3.

Dans le mode de réalisation représenté à la figure 3, le détecteur 1 réalise une détection directe du niveau de la porteuse F_{RACH}.

Le dispositif d'atténuation sélective compris dans la seconde voie du circuit du récepteur, est préférentiellement, mais non nécessairement, un dispositif interférométrique, c'est-à-dire assurant l'atténuation par interférométrie. Un tel dispositif réalise l'injection par couplage, dans le signal multifréquence, en opposition de phase et à niveau requis, d'un signal d'atténuation à la fréquence f_{RACH} de la porteuse F_{RACH}. Le récepteur comprend donc des moyens de filtrage et d'amplification de la porteuse F_{RACH} permettant de générer ce signal d'atténuation.

La fréquence f_{RACH} de la porteuse F_{RACH} étant fonction de la cellule dans laquelle le récepteur est implanté, il faudrait en principe autant de tels moyens différents qu'il y a de cellules dans le motif de base du réseau cellulaire. En outre, en cas de modification du plan de fréquences, l'affectation des récepteurs à telle ou telle cellule devrait être modifiée. Ou alors, les moyens de génération du signal d'atténuation à la fréquence f_{RACH} de la porteuse F_{RACH} devraient être modifiés. On va voir que, grâce à l'invention, les problèmes ci-dessus sont en fait éliminés.

En effet, selon une caractéristique avantageuse de l'invention, le signal d'atténuation à la fréquence f_{RACH} est généré en fonction de la fréquence f_{BCCH} de la porteuse F_{BCCH} de manière simple et efficace. On connaît en effet des moyens de régénération de la porteuse F_{BCCH} et on sait, de façon certaine, que la porteuse F_{RACH} se trouve 45 MHz en dessous de la porteuse F_{BCCH}.

Le récepteur selon l'invention comporte donc un circuit 12 de régénération de la fréquence f_{BCCH} de la porteuse balise F_{BCCH}.

De façon avantageuse, ce circuit 12 est un circuit d'une station mobile du système conçu pour remplir cette fonction. On sait en effet que les stations mobiles du système de radiocommunication cellulaire comprennent un tel circuit pour détecter en permanence le niveau de la porteuse balise de la cellule dans laquelle elles se trouvent ainsi d'ailleurs que le niveau des porteuses balises des cellules adjacentes.

Dans un exemple de réalisation particulièrement simple, une station mobile est tout simplement installée à demeure dans le récepteur pour y tenir le rôle de circuit de régénération de la fréquence f_{BCCH} de la porteuse F_{BCCH}.

Le dispositif interférométrique représenté à la figure 3 est une boucle d'interférence L, dont une branche directe comprend une ligne à retard 22 en série avec un atténuateur variable 18, et dont une branche secondaire comprend des moyens de filtrage à bande étroite permettant d'isoler la porteuse F_{RACH}.

La branche secondaire comprend un coupleur 25 disposé avant la ligne à retard 22 et un coupleur 26 disposé après l'atténuateur variable 18.

Entre ces deux coupleurs 25 et 26, la branche secondaire comporte :
- des premiers moyens de transposition pour assurer la transposition du signal à une fréquence intermédiaire;
- des moyens de filtrage à bande étroite fonctionnant à la fréquence intermédiaire;
- et des seconds moyens de transposition pour rétablir le signal dans sa bande d'origine après filtrage.

Les premiers et les seconds moyens de transposition comprennent chacun un modulateur 8a et 10a respectivement. En outre, Ces premiers et ces seconds moyens comprennent avantageusement un même et unique oscillateur local 11 oscillant à une fréquence qui est fonction de la fréquence f_{BCCH} de la porteuse F_{BCCH} régénérée, de l'écart constant entre la fréquence de la porteuse F_{BCCH} et celle de la porteuse F_{RACH} (écart duplex, qui vaut 45 MHz), et de la fréquence intermédiaire.

Dans le mode de réalisation de la figure 3, la fréquence intermédiaire est basse par rapport aux fréquences des porteuses GSM contenues dans le signal multifréquence.

Dans un exemple, la fréquence intermédiaire vaut 10,7 MHz. L'oscillateur 11 est alors commandé par le circuit de régénération 12 de la fréquence de la porteuse F_{BCCH}, de manière à osciller à la fréquence f_{BCCH} -45 MHz -10,7 MHz.

Les moyens de filtrage comprennent un filtre passe-bande 9a à bande étroite, centré sur la fréquence intermédiaire. La bande passante du filtre 9a vaut 200 KHz de manière à ne conserver que la porteuse F_{RACH} transposée à la fréquence intermédiaire.

On comprend donc que les premiers moyens de transposition ont pour fonction de transposer le signal à filtrer à une fréquence intermédiaire à laquelle les moyens de filtrage sont plus faciles à réaliser. En effet dans le mode réalisation de la figure 3, la fréquence intermédiaire vaut 10,7 MHz et il est plus facile de réaliser un filtre passe-bande de 200 KHz de largeur à cette fréquence qu'à une fréquence GSM de l'ordre de 900 à 1000 MHz.

Le signal en sortie des seconds moyens de transposition 10a est filtré au moyen d'un filtre passe-bande 14, puis il est déphasé au moyen notamment du déphaseur variable 15 et amplifié de façon linéaire au moyen d'un amplificateur 19, respectivement à la phase requise (180°) au niveau requis (quelques milliwatts) pour constituer le signal d'atténuation de la boucle interférométrique. Il est ensuite réinjecté dans la branche primaire, en opposition de phase, par l'intermédiaire du coupleur 26.

L'atténuation du niveau de la porteuse F_{RACH} qui est ainsi obtenue est de l'ordre de 20 à 30 dB.

En vue du réglage de la boucle L, des moyens complémentaires sont en outre prévus dans le circuit du récepteur pour commander l'atténuateur variable 13 et le déphaseur variable 15.

Ces moyens comprennent un commutateur 6 à deux entrées et une sortie, disposé dans la seconde voie du circuit, entre le commutateur 5a et le coupleur 25. Plus précisément, une première entrée du commutateur 6 est reliée à la seconde sortie du commutateur 5a, et la sortie du commutateur 6 est reliée à l'entrée du coupleur 25. Le seconde entrée du commutateur 6 est reliée au circuit 12 de régénération de la porteuse F_{BCCH} pour recevoir un signal pilote à la fréquence f_{RACH} de la porteuse F_{RACH}.

Dans une première position du commutateur 6, l'entrée de la seconde voie du circuit est connectée à la sortie du commutateur 5a qui délivre le signal multifréquence reçu par l'antenne A et filtré par le filtre F1.

Dans une seconde position du commutateur 6, l'entrée de la seconde voie du circuit est connectée à une sortie du circuit de régénération 12 qui délivre le signal pilote à la fréquence f_{RACH} et à niveau connu et constant. Ce signal est introduit à l'entrée de la boucle L. Si celle-ci est bien réglée, le signal en sortie de la boucle L doit avoir, à la fréquence f_{RACH}, un niveau quasiment nul. Dit autrement, le signal pilote injecté en entrée de la boucle L doit théoriquement avoir disparu en sortie de ladite boucle.

Le circuit comprend des moyens de mesure du niveau résiduel du signal pilote en sortie de la boucle L. Ces moyens sont des moyens de mesure du niveau du signal à la fréquence f_{RACH} en sortie de la boucle L. Ces moyens comprennent un coupleur 27 disposé dans la seconde voie du circuit, entre la sortie du coupleur 26 et la seconde entrée du commutateur 5b, ainsi qu'un détecteur 16.

Dans le mode de réalisation décrit à la figure 3, ce détecteur 16 réalise une détection directe du niveau du signal à la fréquence f_{RACH} de la porteuse F_{RACH}. L'atténuateur variable 13 ainsi que le déphaseur variable 15 sont réglés en fonction de cette détection par des moyens non représentés.

Cette mesure et ces réglages sont effectués pendant des phases de test réalisées en l'absence de porteuse F_{RACH} de niveau supérieur à un seuil déterminé.

De préférence, la première voie comporte une ligne à retard 21 pour compenser le retard introduit par la seconde voie du circuit lorsqu'elle est active. De la sorte, le retard des signaux transmis est identique quelle que soit la voie qui est active. On notera l'effet de la ligne à retard 21 et celui de la ligne à retard 22 doivent être pris en compte tous les deux pour réaliser cet équilibre des retards. Les lignes à retard 21 et 22 ont également pour fonction d'assurer la stabilité en fréquence de l'équilibre des boucles.

Le fonctionnement du circuit est le suivant. En l'absence de dépassement par le niveau de la porteuse F_{RACH} de la valeur seuil Vo, les commutateurs 5a et 5b sont commandés par les moyens SEL de façon à ce que la première voie soit active.

En cas de dépassement de la valeur Vo par le niveau de la porteuse F_{RACH}, les commutateurs 5a, 6 et 5b sont commandés en sorte que la seconde voie soit active. La ligne à retard 20 a alors pour fonction de permettre la commutation des commutateurs 5a et 6 avant l'arrivée du signal multifréquence qui doit être atténué de façon sélective.

Lorsque la première voie est active seulement, le commutateur 6 est commandé de façon à ce que le signal pilote à la fréquence f_{RACH} soit injecté dans la seconde voie pour assurer le réglage de la boucle L.

A la figure 4, on a représenté un second mode de réalisation de l'invention. Sur cette figure, les mêmes éléments qu'à la figure 3 portent les mêmes références.

Le mode de réalisation de la figure 4 se distingue de celui de la figure 3 principalement en ce que les moyens de filtrage de la seconde branche du dispositif interférométrique fonctionnent à fréquence intermédiaire nulle et non plus à fréquence intermédiaire faible.

A cet effet, les premiers moyens de modulation et les seconds moyens de modulation comprennent un premier et un second modulateur en phase et en quadrature, respectivement 8b et 10b, au lieu respectivement des modulateurs 8a et 10a. De plus, l'oscillateur local 11 est commandé pour osciller à la fréquence f_{BCCH} -45MHz, c'est à dire à la fréquence de la porteuse F_{RACH}.

En outre, les moyens de filtrage à bande étroite comportent alors un filtre passe-bas 9b pour le filtrage de la composante en phase I, et un second filtre passe-bas 9b' pour le filtrage de la composante en quadrature Q. Ces deux filtres ont une largeur égale à 200 KHz et remplacent le filtre 9a de la figure 3.

De même, le mode de réalisation représenté à la figure 4 se distingue de celui représenté à la figure 3 en ce que les moyens de détection du niveau de la porteuse F_{RACH} après le filtre F1 sont des moyens de détection synchrone. A cet effet, le détecteur 1 de la figure 3 est remplacé par un détecteur synchrone 4 fonctionnant par détection sur la composante en phase I et sur la composante en quadrature Q après démodulation en phase et en quadrature par un démodulateur 7.

De même encore, les moyens de mesure du niveau résiduel du signal pilote, pour le réglage de la boucle L, sont des moyens de détection synchrones. A cet effet, le détecteur 16 est remplacé par un détecteur synchrone 18 fonctionnant par détection sur la composante en phase I et sur la composante en quadrature Q après démodulation en phase et en quadrature par un démodulateur 17.

Les démodulateurs 8b, 10b, 7 et 17 sont pilotés par la fréquence générée par l'oscillateur local 11, à savoir la fréquence f_{RACH} de la porteuse F_{RACH}.

On notera que le choix d'un fonctionnement des moyens de filtrage à fréquence intermédiaire basse ou à fréquence intermédiaire nulle est indépendant du fonctionnement des moyens de détection du niveau de la porteuse F_{RACH} après le filtre F1 et du fonctionnement et des moyens de mesure du niveau résiduel du signal pilote en sortie de la boucle L. En effet, ces modes de fonctionnement peuvent être associés selon d'autres modes de réalisation que ceux décrits ci-dessus en référence aux figures 3 et 4.

## Revendications

1. Récepteur de système de radiocommunications cellulaire, notamment un système GSM 900 ou DCS 1800 qui comporte des premiers moyens pour transmettre, dans le sens réseau fixe vers réseau mobile, un signal multifréquence ayant un spectre qui comprend une porteuse balise (F_{BCCH}) dont la fréquence est fixe, et des seconds moyens, dont le récepteur fait partie, pour transmettre, dans le sens réseau mobile vers réseau fixe, un signal multifréquence ayant un spectre qui comprend une porteuse d'accès aléatoire (F_{RACH}) dont la fréquence est décalée d'un écart déterminé par rapport à la fréquence de ladite porteuse balise,
caractérisé en ce qu'il comporte un dispositif d'atténuation sélective du niveau de la seule porteuse d'accès aléatoire (F_{RACH}) lorsque celui-ci est supérieur à un seuil déterminé (Vo).

2. Récepteur selon la revendication 1, caractérisé en ce que qu'il comporte :
- des moyens de détection du niveau de la porteuse d'accès aléatoire (F_{RACH});
- une première voie qui est active en l'absence de dépassement du seuil déterminé (Vo) par le niveau de la porteuse d'accès aléatoire (F_{RACH})
- une seconde voie, comportant le dispositif d'atténuation sélective, qui est active dans le cas contraire;
- et des moyens de sélection (SEL) pour sélectionner l'une ou l'autre voie en fonction du niveau de la porteuse d'accès aléatoire (F_{RACH}).

3. Récepteur selon la revendication 1 ou selon la revendication 2, caractérisé en ce que le dispositif d'atténuation sélective comporte:
- des premiers moyens de transposition (8,11) pour assurer la transposition du signal à une fréquence intermédiaire basse ou à fréquence intermédiaire nulle;
- des moyens (9) de filtrage à bande étroite fonctionnant à la fréquence intermédiaire;
- et des seconds moyens de transposition (9,11) pour rétablir le signal dans sa bande d'origine après filtrage.

4. Récepteur selon l'une des revendications 1 à 3, caractérisé en ce qu'il comporte un circuit (12) de régénération de la fréquence (f_{BCCH}) de la porteuse balise (F_{BCCH}).

5. Récepteur selon la revendication 4, caractérisé en ce que ledit circuit de régénération (12) de la fréquence (f_{BCCH}) de la porteuse balise (F_{BCCH}) est un circuit d'une station mobile du système conçu pour remplir cette fonction.

6. Récepteur selon la revendication 4 ou la revendication 5, caractérisé en ce qu'une station mobile est installée à demeure dans le récepteur pour y tenir le rôle de circuit de régénération de la fréquence (f_{BCCH}) de la porteuse balise (F_{BCCH}).

7. Récepteur selon les revendications 3 à 6, caractérisé en ce les premiers et les seconds moyens de transposition comprennent un même et unique oscillateur local (11) oscillant à une fréquence qui est fonction de la fréquence (f_{BCCH}) de la porteuse balise (F_{BCCH}) régénérée, de l'écart constant entre la fréquence de la porteuse balise (F_{BCCH}) et celle de la porteuse d'accès aléatoire (F_{RACH}), et de la fréquence intermédiaire.

8. Récepteur selon l'une des revendications 3 à 7, caractérisé en ce que, les moyens de filtrage fonctionnant à fréquence intermédiaire basse, les moyens de filtrage comprennent un filtre passe-bande (9a) à bande étroite centré sur la fréquence intermédiaire.

9. Récepteur selon l'une des revendications 3 à 7, caractérisé en ce que, les moyens de filtrage fonctionnant à fréquence intermédiaire nulle, les premiers moyens de transposition comprennent un démodulateur en phase et en quadrature (8b), et les moyens de filtrage comprennent un premier (9b) et un second (9b') filtres passe-bas pour filtrer chacune des composantes en phase et en quadrature du signal transposé.

10. Récepteur selon l'une des revendications précédentes, caractérisé en ce que le dispositif d'atténuation sélective est un dispositif interférométrique assurant l'injection par couplage, dans le signal multifréquence, en opposition de phase et à niveau requis, d'un signal d'atténuation à la fréquence (f_{RACH}) de la porteuse d'accès aléatoire (F_{RACH}).

11. Récepteur selon la revendication 2, caractérisé en ce que la première voie comporte une ligne à retard (21) pour compenser le retard introduit par la seconde voie lorsqu'elle est active, en sorte que le retard des signaux transmis est identique quelque soit la voie qui est active.

12. Récepteur selon l'une des revendications précédentes, caractérisé en ce qu'il comporte des moyens pour injecter dans la seconde voie un signal pilote à la fréquence (f_{RACH}) de la porteuse d'accès aléatoire (F_{RACH}) de manière à permettre le réglage du dispositif interférométrique même en cas d'absence prolongée d'émission d'une telle porteuse par une station mobile du système.

13. Récepteur selon l'une des revendications précédentes, caractérisé en ce la porteuse d'accès aléatoire (F_{RACH}) se trouve dans la partie centrale de la bande utile du signal multifréquence.

14. Système de radiocommunications cellulaire, notamment un système GSM 900 ou DCS 1800, caractérisé en ce qu'il comporte un récepteur selon l'une des revendications précédentes.

## Patentansprüche

1. Empfänger für ein zellulares Funkkommunikationssystem, insbesondere ein GSM900- oder DCS1800-System, das erste Vorrichtungen für die Übertragung vom Festnetz zum Mobilnetz, wobei ein Mehrfrequenzsignal ein Spektrum aufweist, das einen Signalträger (F_{BCCH}) mit fester Frequenz beinhaltet, und zweite Vorrichtungen umfaßt, zu denen der Empfänger gehört, um von dem Mobilnetz zum Festnetz ein Mehrfrequenzsignal zu übertragen, das ein Spektrum aufweist, das einen Direktzugriffsträger (F_{RACH}) mit einer Frequenz umfaßt, die um einen vorgegebenen Betrag in Bezug auf die Frequenz des Signalträgers verschoben ist, dadurch gekennzeichnet, daß
er einen selektiven Abschwächer für den Pegel des einzigen Direktzugriffsträgers (F_{RACH}) umfaßt, wenn dieser höher als ein vorgegebener Schwellenwert (Vo) ist.

2. Empfänger nach Anspruch 1, dadurch gekennzeichnet, daß er umfaßt:
- Vorrichtungen zum Erfassen des Pegels des Direktzugriffsträgers (F_{RACH}),
- einen ersten Pfad, der bei Nicht-Überschreiten des vorgegebenen Schwellenwertes (Vo) durch den Pegel des Direktzugriffsträgers (F_{RACH}) aktiviert wird,
- einen zweiten Pfad, der den selektiven Abschwächer umfaßt, der im gegenteiligen Fall aktiviert wird,
und
- Auswahlvorrichtungen (SEL) zum Auswählen des einen oder des anderen Pfades in Abhängigkeit von dem Pegel des Direktzugriffsträgers (F_{RACH}).

3. Empfänger nach Anspruch 1 oder 2, dadurch gekennzeichnet, daß der selektive Abschwächer umfaßt:
- erste Umsetzervorrichtungen (8, 11) zum Umsetzen des Signals auf eine niedrige Zwischenfrequenz oder eine Zwischenfrequenz mit dem Wert Null,
- Vorrichtungen (9) für das schmalbandige Filtern der Zwischenfrequenz,
und
- zweite Umsetzervorrichtungen (9, 11) für das erneute Bereitstellen des Signals in seinem Ursprungsband nach dem Filtern.

4. Empfänger nach einem der Ansprüche 1 bis 3, dadurch gekennzeichnet, daß er einen Schaltkreis (12) für das Wiederherstellen der Frequenz (f_{BCCH}) des Signalsträgers (F_{BCCH}) umfaßt.

5. Empfänger nach Anspruch 4, dadurch gekennzeichnet, daß der Schaltkreis zum Wiederherstellen (12) der Frequenz (f_{BCCH}) des Signalträgers (F_{BCCH}) ein Schaltkreis einer Mobilstation des Systems ist, der zum Ausfüllen dieser Funktion dient.

6. Empfänger nach Anspruch 4 oder 5, dadurch gekennzeichnet, daß eine Mobilstation auf Dauer in dem Empfänger installiert ist, um dort die Rolle des Schaltkreises für die Wiederherstellung der Frequenz (f_{BCCH}) des Signalträges (F_{BCCH}) auszufüllen.

7. Empfänger nach einem der Ansprüche 3 bis 6, dadurch gekennzeichnet, daß die ersten und zweiten Umsetzervorrichtungen einen gleichen und einzigen lokalen Oszillator (11) umfassen, der auf einer Frequenz schwingt, die von der Frequenz f_{(BCCH}) des wiederhergestellten Signalträgers (F_{BCCH}) abhängt, wobei ein konstanter Abstand zwischen der Frequenz des Signalträgers (F_{BCCH}) und der des Direktzugriffsträgers (F_{RACH}) und der Zwischenfrequenz besteht.

8. Empfänger nach einem der Ansprüche 3 bis 7, dadurch gekennzeichnet, daß die Filtervorrichtungen für die tiefe Zwischenfrequenz ausgelegt sind und die Filtervorrichtungen ein Tiefpaßfilter (9a) umfassen, das dauerhaft auf der Zwischenfrequenz zentriert ist.

9. Empfänger nach einem der Ansprüche 3 bis 7, dadurch gekennzeichnet, daß die Filtervorrichtungen für die Zwischenfrequenz Null ausgelegt sind, die ersten Umsetzervorrichtungen einen Quadratur-Phasendemodulator (8b) umfassen und die Filtervorrichtungen ein erstes (9b) und ein zweites (9b') Tiefpaßfilter zum Quadratur-Phasen-Filtern jeder der Komponenten des umgesetzten Signals umfassen.

10. Empfänger nach einem der vorangehenden Ansprüche, dadurch gekennzeichnet, daß der selektive Abschwächer eine interferrometrische Vorrichtung ist, mit der die Einkopplung in das Mehrfrequenzsignal mit gegenläufiger Phase und erforderlichem Pegel eines Abschwächersignals auf der Frequenz (f_{RACH}) des Direktzugriffsträgers (F_{RACH}) möglich wird.

11. Empfänger nach Anspruch 2, dadurch gekennzeichnet, daß der erste Pfad eine Verzögerungsleitung (21) zum Kompensieren der Verzögerung bei aktivem zweiten Pfad umfaßt, so daß die Verzögerung der übertragenen Signale unabhängig von dem aktiven Pfad identisch ist.

12. Empfänger nach einem der vorangehenden Ansprüche, dadurch gekennzeichnet, daß er Vorrichtungen zum Entkoppeln eines Pilotsignals auf der Frequenz (f_{RACH}) des Direktzugriffsträgers F_{(RACH}) in den zweiten Pfad umfaßt, so daß die Regelung der interferrometrischen Vorrichtung selbst bei längerer Zeit ohne eine Ausstrahlung eines solchen Träges durch eine mobile Station des Systems möglich ist.

13. Empfänger nach einem der vorangehenden Ansprüche, dadurch gekennzeichnet, daß der Direktzugriffsträger (F_{RACH}) sich im zentralen Abschnitt des Nutzbandes des Mehrfrequenzsignals befindet.

14. Zelluläres Funkkommunikationssystem, insbesondere ein GSM900- oder DCS1800-System, dadurch gekennzeichnet, daß es einen Empfänger nach einem der vorangehenden Ansprüche umfaßt.

## Claims

1. A receiver for a cellular radio communication system, in particular a GSM900 or DCS1800 system that comprises first means for transmitting, in the direction from a fixed network to a mobile network, a multi-frequency system having a spectrum which includes a datum carrier (F_{BCCH}) of fixed frequency, and second means, of which the receiver is a part, for transmitting, in the direction from the mobile network to the fixed network, a multi-frequency signal having a spectrum which includes a random access carrier (F_{RACH}), the frequency of which differs from the frequency of the said datum carrier by a predetermined amount, characterised in that it includes an attenuating device for selecting the level of the only random access carrier (F_{RACH}) when the latter is above a predetermined threshold (V₀).

2. A receiver according to Claim 1, characterised in that it comprises:
- means for detecting the level of the random access carrier (F_{RACH});
- a first path which is active when the predetermined threshold (V₀) is not exceeded by the level of the random access carrier (F_{RACH});
- a second path, including the selective attenuating device, which is active in the contrary case;
- and selection means (ACL) for selecting one or other path as a function of the level of the random access carrier (F_{RACH}).

3. A receiver according to Claim 1 or Claim 2, characterised in that the selective attenuating device comprises:
- first transposition means (8, 11) for transposing the signal to a low intermediate frequency or a zero intermediate frequency;
- narrow band filter means (9) operating at the intermediate frequency;
- and second transposition means (9, 11) for reestablishing the system in its original band after filtering.

4. A receiver according to one of Claims 1 to 3, characterised in that it includes a circuit (12) for regenerating the frequency (f_{BCCH}) of the datum carrier (F_{BCCH}).

5. A receiver according to Claim 4, characterised in that the said regenerating circuit (12) for the frequency (f_{BCCH}) of the datum carrier (F_{BCCH}) is a circuit of a mobile station in the system designed to perform that function.

6. A receiver according to Claim 4 or Claim 5, characterised in that a mobile station is installed fixed in the receiver so as to serve as a circuit for regeneration of the frequency (f_{BCCH}) of the datum carrier (F_{BCCH}).

7. A receiver according to Claims 3 to 6, characterised in that the first and second transposition means comprise a single common local oscillator (11) oscillating at a frequency which is a function of the frequency (f_{BCCH}) of the regenerated datum carrier (F_{BCCH}), the constant difference between the frequency of the datum carrier (F_{BCCH}) and that of the random access carrier (F_{RACH}), and the intermediate frequency.

8. A receiver according to one of Claims 3 to 7, characterised in that, with the filter means working at low intermediate frequency, the filter means comprise a band pass filter (9a) with a narrow band centred on the intermediate frequency.

9. A receiver according to one of Claims 3 to 7, characterised in that, with the filter means working at zero intermediate frequency, the first transposition means comprise a phase and quadrature demodulator (8b), and the filter means comprise a first low pass filter (9b) and a second low pass filter (9b'), each of which is for the purpose of filtering components of the transposed signal in phase and quadrature.

10. A receiver according to one of the preceding Claims, characterised in that the selective attenuating device is an interferometric device for injecting, by coupling into the multi-frequency signal, in phase opposition and at a required level, a signal for attenuating the frequency (f_{RACH}) of the random access carrier (F_{RACH}).

11. A receiver according to Claim 2, characterised in that the first path comprises a delay line (21) for compensating for the delay introduced by the second path when it is active, so that'the delay in the signals transmitted is identical whichever path is active.

12. A receiver according to one of the preceding Claims, characterised in that it includes means for injecting into the second path a pilot signal at the frequency (f_{RACH}) of the random access carrier (F_{RACH}), whereby to adjust the interferometric device even in the event of prolonged absence of any emission of such a carrier by a mobile station of the system.

13. A receiver according to one of the preceding Claims, characterised in that the random access carrier (F_{RACH}) is in the central portion of the usable band of the multi-frequency signal.

14. A cellular radio communication system, in particular a GSM900 or DCS1800 system, characterised in that it includes a receiver according to one of the preceding Claims.
